# EUROPÄISCHE PATENTSCHRIFT

(11) **EP 2 577 348 B1**
(45) Veröffentlichungstag und Bekanntmachung des Hinweises auf die Patenterteilung: **19.03.2014**
(21) Anmeldenummer: 11729384.5
(22) Anmeldetag: 24.05.2011
(51) Int. Cl.: G01S 15/42, G01S 15/89

(54) **VERFAHREN UND VORRICHTUNG ZUM VERMESSEN EINES BODENPROFILS**
METHOD AND DEVICE FOR MEASURING A GROUND PROFILE
PROCÉDÉ ET DISPOSITIF POUR MESURER UN PROFIL DE FOND

(30) Priorität: 26.05.2010 DE 102010021635
(43) Veröffentlichungstag der Anmeldung: 10.04.2013
(73) Patentinhaber: ATLAS ELEKTRONIK GmbH, 28309 Bremen (DE)
(72) Erfinder: FASSBENDER, Tobias, 28207 Bremen (DE); FREKING, Benno, 28844 Weyhe-Leeste (DE)
(74) Vertreter: Lecomte & Partners
(86) Internationale Anmeldenummer: PCT/EP2011/058468
(87) Internationale Veröffentlichungsnummer: WO 2011/147830

(56) Entgegenhaltungen:
- WO-A2-02/084319
- HANSEN R E ET AL: "Signal processing for AUV based interferometric synthetic aperture sonar", OCEANS 2003. MTS/IEEE PROCEEDINGS. CELEBRATING THE PAST, TEAMING TOWARD THE FUTURE. SAN DIEGO, CA, SEPT. 22 - 26, 2003; [OCEANS MTS/IEEE CONFERENCE PROCEEDINGS], COLUMBIA, MD : MARINE TECHN. SOC, US, Bd. 5, 22. September 2003 (2003-09-22), Seiten 2438-2444, XP010694872, DOI: 10.1109/OCEANS.2003.178294 ISBN: 978-0-933957-30-5
- "Sintes C.: Interferometric side scan sonar: A tool for high resolution sea floor exploration", PROCEEDINGS INTERSPILL 2002, März 2002 (2002-03), XP002667116, in der Anmeldung erwähnt

## Beschreibung

Die Erfindung betrifft ein Verfahren zum Vermessen eines Bodenprofils mittels einer an einem Wasserfahrzeug angebrachten Sende- und Empfangsanordnung der im Oberbegriff des Anspruchs 1 genannten Art sowie eine Vorrichtung zum Ausführen des Verfahrens gemäß Anspruch 9.

Die Erfindung wird im Wesentlichen zum Vermessen eines Bodenprofils innerhalb eines vorbestimmten Unterwasserareals angewandt und/oder zum Suchen nach versunkenen Objekten, wie z.B. Schiffe oder Minen. Ferner ist es möglich das erfindungsgemäße Verfahren zum Vermeiden von Kollision und/oder zum Navigieren anzuwenden.

Herkömmlicherweise werden zum Vermessen des Bodenprofils Fächerlotsysteme eingesetzt. Aus EP 0 140 258 A1 ist ein derartiges Fächerlotsystem bekannt, bei dem zur Ermittlung eines Bodenprofils einzelne Messprofile von Senderzielstreifen in Fahrtrichtung eines Vermessungsschiffes aneinandergereiht werden. Dazu werden Schallimpulse ausgesendet, welche nach Reflektion an einem Objekt bzw. dem Gewässergrund als Echos mittels einer Empfangsanordnung richtungsselektiv empfangen werden. Durch eine im Rahmen einer sog. Richtungsbildung durchgeführten elektronischen Signalverarbeitung einzelner Empfangssignale der Wandler wird erreicht, dass die Empfangsanordnung in dem Unterwasserareal einen Fächer von einer Vielzahl gegeneinander verschwenkter Richtcharakteristiken aufweist.

Um bei der Vermessung des Bodenprofils genaue Details der Bodenstruktur oder versunkener Objekte sichtbar zu machen, wird eine hohe Winkelauflösung gefordert. Da eine hohe Winkelauflösung durch Bündelung der Richtcharakteristik beim Senden und/oder Empfangen erreicht wird, besteht eine übliche Maßnahme darin, die Abmessung der Sende- und/oder Empfangsanordnung zu vergrößern, um dem Öffnungswinkel ihrer Richtcharakteristik zu verkleinern. Diese Methode setzt jedoch große Wandlerbasen voraus und ist daher sehr kostenintensiv.

Alternativ sind Sonarsysteme mit interferometrischer Technik bspw. aus Sintes C.: Interferometric side scan sonar: A tool for high resolution sea floor exploration, Proceedings Interspill 2002, March 2002 bekannt. Dieser Artikel stellt allgemeine Grundlagen der Interferometrie dar und beschreibt im Wesentlichen dessen Grenze bzgl. Störanfälligkeiten.

In der Interferometrie werden zusätzliche Höheninformationen zu einem Objekt dadurch gewonnen, dass eine Phasendifferenz der an zwei Orten empfangenen Signale ermittelt wird. Dazu wird eine zweite, unabhängig von der ersten arbeitenden Empfangsantenne benötigt. Diese liefert ein Empfangssignal, welches durch die unterschiedlichen Entfernungen zum Objekt ein zur ersten Antenne zeitverzögertes Signal liefert. Die gemessene Phasendifferenz zwischen den Empfangssignalen der verschiedenen Antennen ist jedoch üblicherweise mehrdeutig. Lediglich bei einem Abstand der Wandler kleiner als eine halbe Wellenlänge des Empfangssignals ist die gemessene Phase eindeutig. Herkömmlicherweise wird bei direkter Phasendifferenzmessung ein Sonarsystem mit drei bis vier Empfangsantennen verwendet. Somit stehen für eine Phasenkorrektur drei gemessene Phasendifferenzen zur Verfügung. Der Nachteil jedoch besteht in einem Mehraufwand an benötigten Antennen.

US 5,659,520 A zeigt ein Navigationssystem zur Positionsbestimmung, auf der Basis von Echtzeit-Schätzungen von Positionen von mehreren kooperierenden Zielen. Dazu wird eine Ankunftszeit-Differenz-Schätzung mit Hilfe eines Algorithmus ermittelt sowie eine Schätzung der Dopplerverschiebung der empfangenen Signale. Ein Zeitfenster beseitigt dann die Anteile des empfangenen Signals, welche durch Mehrpfadinterferenzen fehlerbehaftet sind. Aus den relativen Phasendifferenzen zwischen den empfangenen Signalen wird in Verbindung mit der groben Ankunftszeit-Differenz-Schätzung eine genaue Ankunfts-Richtungs-Schätzung ermittelt.

WO 02/084319 A2 offenbart ein Verfahren zum Vermessen eines Bodenprofils gemäß dem Oberbegriff des Ansprunchs 1 sowie eine entsprechende Vorrichtung gemäß dem Oberbegriff des Anspruchs 9.

Der Erfindung liegt nach alledem das Problem zugrunde, ein kostengünstiges Verfahren zum Vermessen eines Bodenprofils anzugeben, welches mittels Phasenauswertung eindeutige Messergebnisse liefert.

Die Erfindung löst dieses Problem durch die Merkmale eines Verfahrens zum Vermessen eines Bodenprofils gemäß Anspruch 1 sowie eine entsprechende Vorrichtung mit den Merkmalen des Anspruchs 9.

Dabei wird mittels einer Sendeanordnung ein Schallsignal gerichtet in ein vorbestimmtes Unterwasserareal abgestrahlt und dessen vom Boden reflektierte Anteile mittels einer Empfangsanordnung empfangen. Die Empfangsanordnung weist wenigstens zwei Wandler auf, welche jeweils ein Empfangssignal pro Lotung erzeugen, das zu vorbestimmen Abtastzeitpunkten abgetastet und gespeichert wird. Die Vermessung des Bodenprofils erfolgt anhand wenigstens zwei Empfangssignale mittels einer reinen Phasenauswertung.

Abhängig von dem Abstand der Wandler der Empfangsanordnung und der Frequenz bzw. der Wellenlänge des ausgesendeten Schallsignals liefert eine reine Phasenauswertung möglicherweise vieldeutige Ergebnisse. Um diese Vieldeutigkeiten zu beseitigen, wird eine grobe zeitliche Verzögerung, nachfolgend Grobverzögerungszeit genannt, des Empfangssignals an einem ersten Wandler relativ zu dem Empfangssignal an einem zweiten Wandler bestimmt. Diese Grobverzögerungszeit gibt die Anzahl an Abtastzeitpunkten an, um die die Empfangssignale aufgrund eines aus der Geometrie der Empfangsanordnung resultierenden Laufzeitunterschiedes der empfangenen Schallsignale gegeneinander verschoben sind.

Eine Phasendifferenz zwischen zwei um die Grobverzögerungszeit verschobenen Empfangssignalen liefert zu einer Vielzahl vorbestimmter Abtastzeitpunkte einen Gangunterschied. Daraus lassen sich für diese Abtastzeitpunkte zugehörige Auftreffwinkel und Auftrefifkoordinaten ermitteln.

Das erfindungsgemäße Verfahren hat den Vorteil, dass trotz einer zuvor erwähnten Vieldeutigkeit der Winkelbestimmung bei Verwendung einer Empfangsanordnung mit wenigstens zwei Wandlern eindeutige Messerergebnisse erzielt werden können, indem zunächst eine Grobverzögerungszeit ermittelt wird, um die die Empfangssignale gegeneinander verschoben werden, und die Phasenauswertung anhand der zuvor verschobenen Empfangssignale erfolgt. Somit sind vorteilhafterweise keine Mehrfachüberfahrten des zu vermessenen Bodenprofils notwendig und es Bedarf nur einer vorbestimmten Sendefrequenz der abgestrahlten Schallsignale.

Eine entsprechende Vorrichtung zur Ausführung des erfindungsgemäßen Verfahrens weist ein Verzögerungsmodul zur Ermittlung der Grobverzögerungszeit auf, ein Phasendifferenzmodul zur Durchführung der Phasenauswertung anhand der zuvor verschobenen Empfangssignale sowie mehrere Berechnungseinheiten zur Berechnung eines Gangunterschiedes aus der Phasendifferenz der Empfangssignale und den daraus resultierenden Empfangswinkel bzw. die Auftreffkoordinate für eine vorbestimmte Anzahl an Abtastzeitpunkten.

In einer bevorzugten Ausführungsform der Erfindung wird zum Ermitteln der Grobverzögerungszeit ein Mustervergleich zweier Empfangssignale der Empfangsanordnung mittels eines statistischen Analyseverfahrens durchgeführt. Vorzugsweise handelt es sich bei diesem Analyseverfahren um eine Kreuzkorrelation oder eine Regressionsanalyse. Durch einen derartigen Mustervergleich lässt sich die Anzahl an Abtastzeitpunkten ermitteln, um die die Empfangssignale gegeneinander verschoben sind. Dies ergibt den Vorteil, dass bei einer anschließenden Phasenauswertung der um die Grobverzögerungszeit verschobenen Empfangssignale keine Vieldeutigkeiten auftreten.

Bei einer Weiterbildung der bevorzugten Vorrichtung zur Ausführung des Verfahrens ist ein Mittel zum Durchführen eines derartigen Mustervergleiches vorgesehen, vorzugsweise weist das Verzögerungsmodul eine entsprechende Analyseeinheit auf.

In einer weiteren bevorzugten Ausführungsform der Erfindung werden aus den Empfangssignalen zugehörige komplexe Signale erzeugt und der Mustervergleich jeweils auf der Grundlage der Einhüllenden des jeweiligen komplexen Signals durchgeführt. Die Einhüllende des komplexen Signals ist signifikant mit den Rückstreueigenschaften eines Objektes bzw. des Bodenprofils verknüpft, denn die darin enthaltenen Informationen entstehen durch Interferenzen der vom Boden reflektierten Schallsignale. Dadurch ist es vorteilhaft möglich, den Mustervergleich der Empfangssignale anhand der Einhüllenden der zugehörigen komplexen Signale durchzuführen.

Bei einer Weiterbildung der bevorzugten Vorrichtung zur Ausführung des Verfahrens ist ein Mittel zum Erzeugen komplexer Signale vorgesehen, insbesondere ein Mischer.

In einer weiteren bevorzugten Ausführungsform der Erfindung werden die Empfangssignale abschnittsweise über eine vorbestimmte Länge in Korrelationspuffer gespeichert, wobei die Korrelationspuffer, die die gleichen Abtastzeitpunkte der Empfangssignale beinhalten zu Korrelationspufferpaaren zusammengefasst werden. Die das Empfangssignal des ersten Wandlers beinhaltenden Korrelationspuffer und die das Empfangssignal des zweiten Wandlers beinhaltenden Korrelationspuffer, die die gleichen Abtastzeitpunkte beinhalten bilden derartige Korrelationspufferpaare. Vorteilhafterweise kann die Grobverzögerungszeit direkt anhand eines Korrelationspufferpaares ermittelt werden. Der Vorteil einer Speicherung der Empfangssignale in Korrelationspuffer liegt ferner darin, dass somit auch eine Offline-Auswertung dieser Signale ermöglicht wird.

Bei einer Weiterbildung der bevorzugten Vorrichtung zur Ausführung des Verfahrens sind derartige Korrelationspuffer bzw. Korrelationspufferpaare vorgesehen.

In einer weiteren Ausführungsform der Erfindung wird zu jedem Korrelationspuffer und/oder Korrelationspufferpaar eine Signallaufzeit des Empfangssignals ermittelt. Die Ermittlung erfolgt vorzugsweise durch eine Mittelwertbildung über die Korrelationspufferlänge. Somit stehen der weiteren Verarbeitung zum Bestimmen einer Entfernung zum Bodenprofil geglättete Werte für die Signallaufzeit zur Verfügung.

Bei einer Weiterbildung der bevorzugten Vorrichtung zur Ausführung des Verfahrens ist ein Mittel zum Ermitteln der Signallaufzeit pro Korrelationspuffer und/oder Korrelationspufferpaar vorgesehen, insbesondere eine Mittelungseinheit.

In einer weiteren Ausführungsform der Erfindung werden die Empfangssignale mit einer vorbestimmten Abtastfrequenz abgetastet, welche größer ist als die vorbestimmte Frequenz des abgestrahlten Schallsignals. Vorzugsweise ist die Abtastfrequenz doppelt so groß wie die Frequenz des abgestrahlten Schallsignals. Diese zeitliche Auflösung, welche sich aus der Abtastfrequenz ergibt, ermöglicht in vorteilhafterweise eine Rekonstruktion des ursprünglichen Signals.

Bei einer Weiterbildung der bevorzugten Vorrichtung zur Ausführung des Verfahrens ist ein Mittel zum Abtasten der Empfangssignale mit einer vorbestimmten Abtastfrequenz, welche größer ist als die vorbestimmte Frequenz des abgestrahlten Schallsignals, vorgesehen, insbesondere ein Abtastglied.

Gemäß einer weiteren bevorzugten Ausführungsform der Erfindung wird der Gangunterschied durch Addition der Grobverzögerungszeit und der Feinverzögerungszeit ermittelt. Da die Grobverzögerungszeit die Vieldeutigkeiten, welche bei der Winkelbestimmung auftreten, eliminiert, lässt sich der Gangunterschied vorteilhafterweise direkt aus der Summe der Grobverzögerungszeit und der Feinverzögerungszeit ermitteln.

Bei einer Weiterbildung der bevorzugten Vorrichtung zur Ausführung des Verfahrens ist ein Mittel zum Ermitteln des Gangunterschiedes aus der Grobverzögerungszeit und der Feinverzögerungszeit vorgesehen, insbesondere ein Summationsglied.

In einer weiteren bevorzugten Ausführungsform der Erfindung wird die Phasendifferenz der um die Grobverzögerungszeit verschobenen Empfangssignale mittels Multiplikation des Empfangssignals mit einer komplexen Zahl ermittelt, und zwar solange, bis bei einem Vergleich des ersten, mit der komplexen Zahl multiplizierten Empfangssignals mit dem zweiten Empfangssignal eine optimale Übereinstimmung der Empfangssignale erzielt wird.

Die Grobverzögerungszeit unterliegt der Auflösung entsprechend der Abtastrate. Da diese Abtastrate nicht beliebig hoch gewählt werden kann, lassen sich nur bestimmte Empfangswinkel entsprechend des Abtastrasters aus der Grobverzögerungszeit ermitteln. Zum Ermitteln der Feinverzögerungszeit werden die Empfangssignale um die Grobverzögerungszeit gegeneinander verschoben, um sich dem wahren Empfangswinkel anzunähern. Die Phase des ersten Empfangssignals kann nun mittels Multiplikation mit einer komplexen Zahl vorteilhaft um beliebig kleine Winkel verändert werden. Durch einen Vergleich der beiden Empfangssignale lässt sich diejenige Phasendifferenz ermitteln, welche einer optimalen Übereinstimmung beider Empfangssignale zugehörig ist.

Bei einer Weiterbildung der bevorzugten Vorrichtung zur Ausführung des Verfahrens ist ein Mittel zum Ermitteln der Phasendifferenz der um die Grobverzögerungszeit verschobenen Empfangssignale vorgesehen, insbesondere ein Multiplikationsglied.

In einer alternativen Ausführungsform der Erfindung weist die Vorrichtung zur Ausführung des erfindungsgemäßen Verfahrens eine Empfangsanordnung auf, bei der zwei elektroakustische und/oder optoakustische Wandler angeordnet sind, deren Abstand zueinander größer als eine halbe Wellenlänge eines erwarteten Empfangssignals ist. Das zu erwartende Empfangssignal ist dabei abhängig von dem abgestrahlten Schallsignal, ggf. unter Berücksichtigung einer etwaigen, geringen Doppler-Frequenzverschiebung aufgrund von Bewegungen des Wasserfahrzeugs. Dabei ist das abgestrahlte Schallsignal vorzugsweise ein sogenanntes Continuous-Wave-Signal (CW-Signal) bzw. ein Signal mit nur einer Frequenz. Die Vorrichtung lässt sich somit vorteilhaft mit sehr kleinen Abmessungen herstellen. Sie kann vorteilhafterweise auch von kleinen, autonom agierenden oder ferngesteuerten Unterwasserfahrzeugen getragen werden.

Weitere vorteilhafte Ausführungsformen der Erfindung ergeben sich aus den Unteransprüchen sowie aus den anhand der anliegenden Zeichnung erläuterten Ausführungsbeispielen. In der Zeichnung zeigen:
- Fig. 1: eine schematische Darstellung eines Wasserfahrzeugs mit dem zu erfassenden Unterwasserareal,
- Fig. 2: eine geometrische Anordnung einer Empfangsanordnung,
- Fig. 3: einen Signalausschnitt zweier Empfangssignale und
- Fig. 4: ein Blockschaltbild des erfindungsgemäßen Verfahrens.

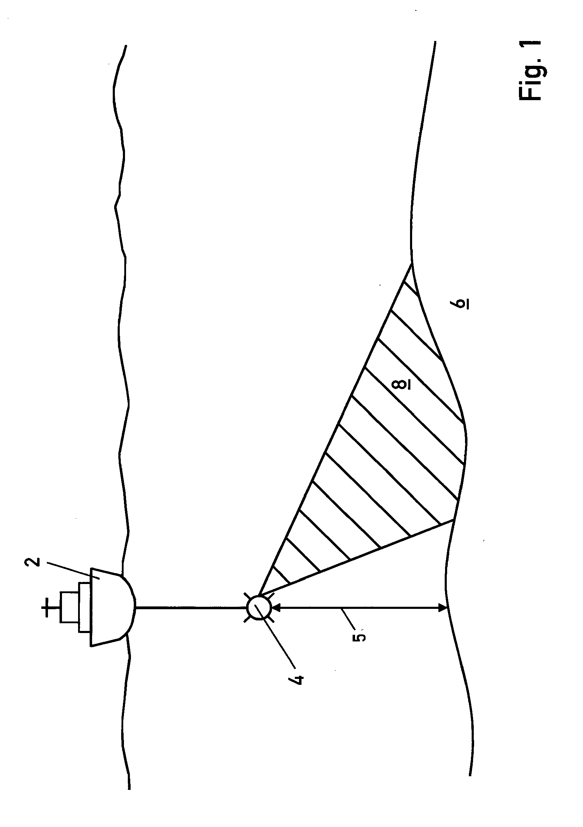

Fig. 1 zeigt eine schematische Darstellung eines in einem Seegebiet fahrenden Wasserfahrzeugs 2 mit einem Side-Scan-Sonarsystem. Eine Sendeanordnung sowie eine Empfangsanordnung sind in einem Schleppgerät 4 untergebracht, welches in wenigen Metern Höhe 5 über einen zu vermessenen Gewässerboden 6 gezogen wird. Es werden mittels der Sendeanordnung Schallsignale gerichtet in ein Unterwasserareal 8 abgestrahlt, die vom Gewässerboden 6 und evtl. darauf liegenden Objekten reflektiert und als Echos mittels der Empfangsanordnung empfangen werden.

Die Erfindung ist jedoch nicht auf ein derartiges Side-Scan-Sonarsystem beschränkt. Bei alternativen Ausführungsformen ist die Sende- und Empfangsanordnung derart ausgebildet, dass Schallsignale in ein Unterwasserareal 8 vor dem Wasserfahrzeug 2 ausgesendet werden. Ferner ist alternativ vorgesehen, in einer alternativen Ausführungsform die Sende- und Empfangsanordnung direkt am Wasserfahrzeug 2 zu befestigen.

Zum Vermessen eines Bodenprofils werden mittels der Sendeanordnung impulsförmige Schallsignale einer Frequenz gerichtet in das Unterwasserareal 8 abgestrahlt, vorzugsweise quer zur Fahrtrichtung des Wasserfahrzeugs 2 mit einer sehr weiten Richtcharakteristik und in Fahrtrichtung mit einer stark gebündelten Schallabstrahlung. Hierzu weist die Sendeanordnung eine Vielzahl auf einen Antennenträger angeordnete Wandler auf, welche gerichtete Schallsignale erzeugen, die in Form eines Sendebeams abgestrahlt werden. Dieser Sendebeam besitzt vorwiegend die Form einer Ellipse, dessen Form und Maße abhängig sind von der Anzahl und der Anordnung der Wandler.

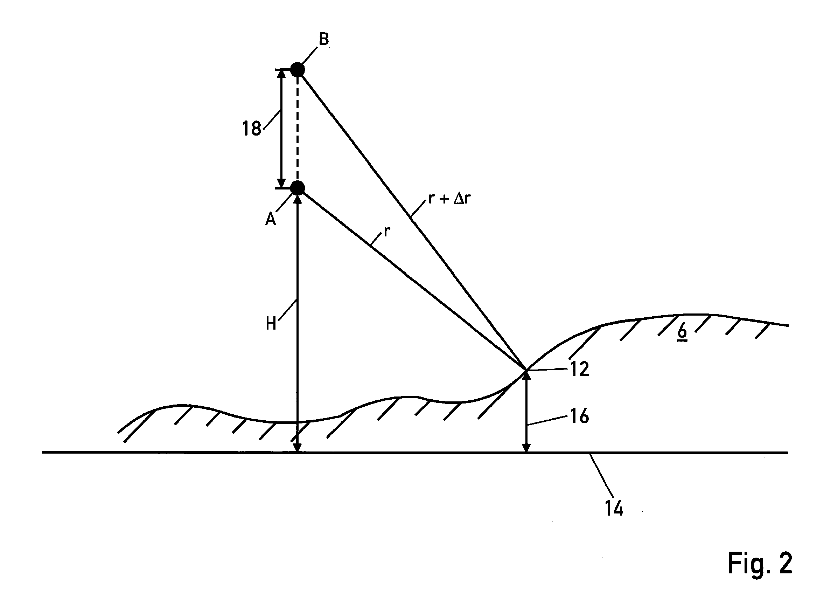

Fig. 2 zeigt eine geometrische Anordnung der Empfangsanordnung gemäß einem Ausführungsbeispiel. Die Entfernung r eines Bodenpunktes 12 lässt sich aus einer gemessenen Signallaufzeit T des Empfangssignals ermitteln. Ein Schallimpuls benötigt eine gewisse Zeit, bis er den Boden erreicht, reflektiert wird und nach einer weiteren Laufzeit an der Empfangsanordnung eintrifft. Aufgrund dieser messbaren Gesamtlaufzeit *τ* kann unter Berücksichtigung der bekannten Schallgeschwindigkeit die Entfernung r des Bodenpunktes 12 ermittelt werden.

Ferner ist in Fig. 2 eine Höhe H in Lotrichtung zu der Empfangsanordnung über eine Bezugsebene 14 aufgetragen.

Um bei der Vermessung des Bodenprofils zusätzlich zu einer Entfernung r auch eine Höhe 16 des Bodenprofils zu ermitteln, wird eine Empfangsanordnung mit wenigstens zwei voneinander beanstandeten Wandlern benötigt. In Fig. 2 sind zwei voneinander beabstandete Wandler A und B dargestellt. Sie weisen einen Abstand 18 voneinander auf, welcher größer ist als die halbe Wellenlänge *λ* des von der Sendeanordnung abgestrahlten Schallsignals.

Es ist jedoch gleichwohl möglich eine vorhandene Wandlerbasis zu nutzen, aus der zwei Wandler A, B heraus gegriffen werden. Ebenso ist das erfindungsgemäße Verfahren mit zwei Wandler-Arrays, welche übereinander angeordnet sind, durchführbar. Ist es durch die Bauart des Wasserfahrzeugs 2 erforderlich, die Wandler A, B versetzt anzuordnen, wird die Geometrie der Empfangsanordnung bei einer Signalverarbeitung der Empfangssignale entsprechend berücksichtigt.

Gemäß dem erfindungsgemäßen Verfahren liefert Wandler B ein Empfangssignal, welches aufgrund der unterschiedlichen Entfernungen r und r+ Δr zum Bodenpunkt 12 gegenüber dem Empfangssignal von Wandler A zeitverzögert ist. Die vom Bodenpunkt 12 reflektierten Anteile des gesendeten Schallsignals erreichen zuerst den Wandler A und um Δt verzögert den Wandler B. Die Empfangssignale weisen eine zur Wegdifferenz Δr proportionale Phasendifferenz Δ*ϕ* auf. Dadurch lässt sich mittels Phasenauswertung die Höhe 16 des Bodenprofils ermitteln, welche bezogen ist auf die Höhe H zu der Bezugsebene 14, welche sich in Lotrichtung unter der Empfangsanordnung befindet.

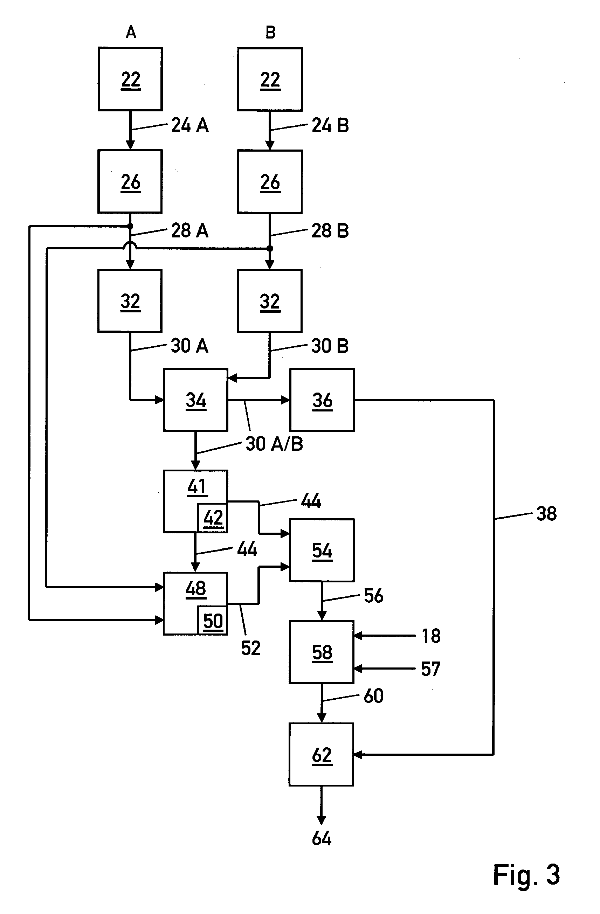

Fig. 3 zeigt ein Blockschaltbild zur Veranschaulichung der Verfahrensschritte gemäß einem Ausführungsbeispiel. Zunächst werden die Empfangssignale der Wandler A und B zu vorbestimmten Abtastzeitpunkten mittels eines Abtastgliedes 22 abgetastet und dann gespeichert. Anschließend werden diese Empfangssignale 24A/B in einem Mischer 26 mit einer weiteren Frequenz gemischt, um entsprechende komplexe Empfangssignale 28A/B zu erzeugen, aus denen die jeweilige Einhüllende 30A/B des Signals ermittelt wird.

Die Einhüllenden 30A/B der komplexen Signale 28A/B von Wandler A und Wandler B werden abschnittsweise in Korrelationspuffern 32 abgelegt. Dabei ist die Länge des Korrelationspuffers 32 bzw. die Anzahl der darin enthaltenen Abtastwerte der Einhüllenden 30A des komplexen Empfangssignals 28A von Wandler A genauso groß wie die Länge des das komplexe Empfangssignal 28B von Wandler B beinhaltenden Korrelationspuffers 32. Diejenige Korrelationspuffer 32, welche jeweils die gleichen Abtastzeitpunkte der komplexen Empfangssignale 28A/B von Wandler A und B beinhalten werden zu Korrelationspufferpaaren 34 zusammengefasst.

Die Signale je Korrelationspufferpaar 34 bzw. Korrelationspuffer 32 werden einer Mittelungseinheit 36 übergeben. Es lässt sich nämlich daraus eine geglättete Signallaufzeit 38 ermitteln. Dies erfolgt bspw. durch eine Mittelwertbildung in der zugehörigen Mittelungseinheit 36 über die Länge des Korrelationspufferpaares 34 bzw. Korrelationspuffers 32.

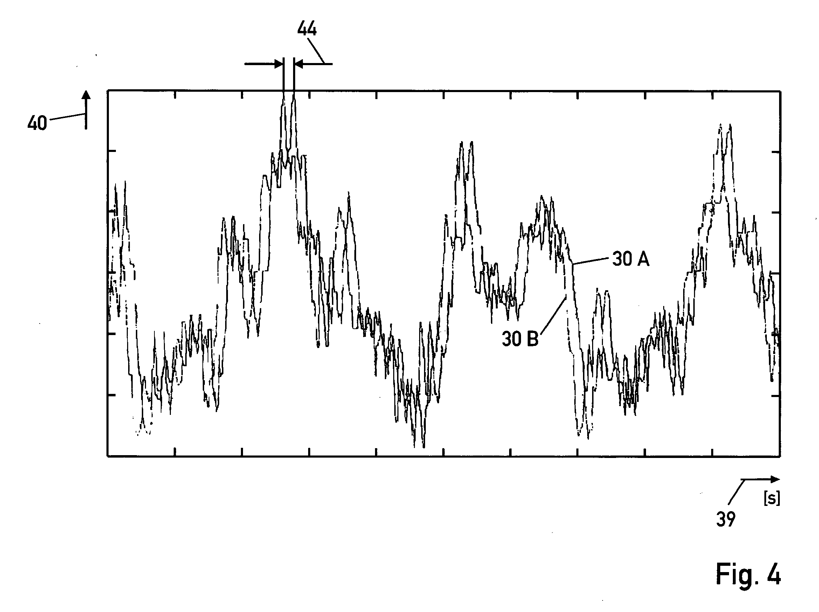

Fig. 4 zeigt einen Signalausschnitt der Einhüllenden 30A/B zweier komplexer Empfangssignale 28A/B. Es ist auf der horizontalen Achse 39 die Zeit in Sekunden aufgetragen und auf der vertikalen Achse 40 die Amplitude der Einhüllenden 30A/B der komplexen Signale 28A/B. Dieser Ausschnitt entspricht bspw. einem Korrelationspufferpaar 34 mit der Einhüllenden 30A des komplexen Empfangssignals 28A von Wandler A und der Einhüllenden 30B des komplexen Empfangssignals 28B von Wandler B über eine vorbestimmte Anzahl an Abtastzeitpunkten.

Die Signalinformationen der Einhüllenden 30A/B der komplexen Signale 28A/B entstehen durch Interferenzen der vom Boden reflektierten Schallsignale.

Ein Mustervergleich dieser beiden Signale des Korrelationspufferpaares 34 gibt die Anzahl an Abtastzeitpunkten an, um die die Empfangssignale 24A/B aufgrund des aus der Geometrie der Empfangsanordnung resultierenden Laufzeitunterschiedes Δ*τ* der empfangenen Schallsignale gegeneinander verschoben sind. Dies erfolgt in einem Verzögerungsmodul 41 gemäß Fig. 3, welches vorzugsweise eine Analyseeinheit 42 aufweist. Diese Analyseeinheit 42 gibt bei zwei Merkmalen eines Objektes die Art und den Grad des Zusammenhangs zwischen diesen Merkmalen an. Werden die Abtastwerte der Einhüllenden 30A des komplexen Empfangssignals 28A von Wandler A auf einer ersten Achse eines rechtwinkligen Koordinatensystems dargestellt und die Abtastwerte der Einhüllenden 30B des komplexen Empfangssignals 28B von Wandler B auf einer zweiten Achse, so lässt sich mittels der Analyseeinheit 42 ein linearer Zusammenhang feststellen. Es erfolgt eine Verschiebung der Abtastwerte auf einer Achse mit anschließender Regressionsanalyse und zwar solange, bis eine zu bestimmende Standardabweichung minimal wird, d.h. die Abtastwerte liegen annähernd auf einer Geraden. Dies entspricht einer optimalen Übereinstimmung der Empfangssignale 24A/B der Wandler A und B. Die derart ermittelten Abtastwerte, um die die Empfangssignale 24A/B verschoben sind, lassen sich unter Berücksichtigung der Abtastfrequenz in eine Grobverzögerungszeit 44 umrechnen. Diese ist in Fig. 4 gut erkennbar und lässt sich zu jedem Abtastzeitpunkt angeben.

Die Erfindung ist jedoch nicht auf eine derartige lineare Regression zur Durchführung des Mustervergleiches beschränkt. Bei alternativen Ausführungsformen kann als Analyseverfahren beispielsweise eine Kreuzkorrelation der Empfangssignale 24A/B oder einer aus den Empfangssignalen 24 A/B abgeleiteten Größe durchgeführt werden.

Es ist jedoch zu beachten, dass die Empfangssignale 24A/B der Wandler mit einer Frequenz abgetastet werden müssen, die größer ist als die Frequenz des gesendeten Signals, insbesondere doppelt so groß.

Als nächster Schritt des erfindungsgemäßen Verfahrens erfolgt eine Phasenauswertung der komplexen Empfangssignale 28A/B der Wandler A und B und zwar für eine vorbestimmte Anzahl an Abtastzeitpunkten. Dazu wird die Grobverzögerungszeit 44 einem Phasendifferenzmodul 48 übergeben um die komplexen Empfangssignale 28A/B der Wandler A und B entsprechend ihrer Grobverzögerungszeit 44 gegeneinander zu verschieben. Auf diese Weise werden Vieldeutigkeiten bei der folgenden Phasenauswertung vermieden.

Anschließend wird die Phase eines der komplexen Empfangssignale 28A/B derart verändert, bis eine optimale Übereinstimmung der Realteile beider Wandlersignale 28A/B erreicht wird. Dies erfolgt mittels Multiplikation mit einer komplexen Zahl in einem entsprechenden Multiplikationsglied 50. Die auf diese Weise ermittelte Phasendifferenz Δ*ϕ* der beiden verschobenen komplexen Empfangssignale wird in dem Phasendifferenzmodul 48 in eine zeitliche Verzögerung, nämlich die Feinverzögerungszeit 52 für die vorbestimmten Abtastzeitpunkte umgerechnet.

Zu jedem der vorbestimmten Abtastzeitpunkte wird in einem folgenden Summationsglied 54 ein zu diesem Abtastzeitpunkt zugehöriger Gangunterschied 56 der Empfangssignale 24 A/B aus der Summe der Grobverzögerungszeit 44 und der Feinverzögerungszeit 52 berechnet.

Unter Berücksichtigung des Abstandes 18 der Wandler A und B und der Kenntnis der Schallgeschwindigkeit 57 in Wandlernähe lässt sich in einer Berechnungseinheit 58 für jeden der vorbestimmten Abtastzeitpunkte ein zu dem zeitlichen Gangunterschied 56 zugehöriger Empfangswinkel 60 bestimmen. Der Empfangswinkel 60 ist derjenige Winkel unter dem die vom Gewässerboden 6 reflektierten Schallsignale an der Empfangsanordnung eintreffen.

Ferner wird für alle vorbestimmten Abtastzeitpunkte in einer weiteren Berechnungseinheit 62 unter Verwendung des Empfangswinkels 60 und der Signallaufzeit 38 eine Auftreffkoordinate 64 des zu vermessenden Bodenprofils ermittelt.

Alle in der vorstehenden Beschreibung sowie in den Ansprüchen genannten Merkmale sind erfindungsgemäß sowohl einzeln als auch in beliebiger Kombination miteinander einsetzbar. Die Erfindung ist daher nicht auf die beschriebenen bzw. beanspruchten Merkmalskombinationen beschränkt. Vielmehr sind alle Kombinationen von Einzelmerkmalen als offenbart zu betrachten.

## Patentansprüche

1. Verfahren zum Vermessen eines Bodenprofils mittels einer an einem Wasserfahrzeug (2) angebrachten Sendeanordnung zum gerichteten Abstrahlen von Schallsignalen in ein Unterwasserareal (8) und einer an diesem Wasserfahrzeug (2) angebrachten Empfangsanordnung mit wenigstens zwei elektroakustischen und/oder optoakustischen Wandlern (A, B) zum Empfangen der von dem Bodenprofil innerhalb des Unterwasserareals (8) reflektierten Schallwellen, aus denen die Wandler (A, B) jeweils ein Empfangssignal pro Lotung erzeugen, welches zu vorbestimmten Abtastzeitpunkten abgetastet und gespeichert wird,
wobei innerhalb einer vorbestimmten Länge der Empfangssignale zweier Wandler (A, B) eine Grobverzögerungszeit (44) aus den Empfangssignalen (24A/B) oder einer aus den Empfangssignalen (24A/B) abgeleiteten Größe ermittelt wird, wobei die Grobverzögerungszeit (44) die Anzahl an Abtastzeitpunkten angibt, um die die Empfangssignale (24A/B) aufgrund eines aus der Geometrie der Empfangsanordnung resultierenden Laufzeitunterschiedes der empfangenen Schallsignale gegeneinander verschoben sind,
**dadurch gekennzeichnet, dass**
für eine vorbestimmte Anzahl Abtastzeitpunkte der um die Grobverzögerungszeit (44) verschobenen Empfangssignale jeweils eine Phasendifferenz (Δϕ) zwischen diesen Empfangssignalen sowie eine aus der Phasendifferenz (Δϕ) resultierenden Feinverzögerungszeit (52) ermittelt wird, für diese Abtastzeitpunkte mittels der Grobverzögerungszeit (44) und der Feinverzögerungszeit (52) ein Gangunterschied (56) der empfangenen Schallwellen bestimmt wird und
für diese Abtastzeitpunkte jeweils eine Auftreffkoordinate (64) des zu vermessenden Bodenprofils aus einem aus dem Gangunterschied (56) resultierenden Empfangswinkel (60) und einer zu dem Abtastzeitpunkt zugehörigen Signallaufzeit (38) der Empfangssignale (24A/B) ermittelt wird.

2. Verfahren nach Anspruch 1, **dadurch gekennzeichnet, dass** zum Ermitteln der Grobverzögerungszeit (44) ein Mustervergleich zweier Empfangssignale (24A/B) der Empfangsanordnung oder einer aus den Empfangssignalen (24A/B) abgeleiteten Größe durchgeführt wird, und zwar mittels eines statistischen Analyseverfahrens, insbesondere einer Kreuzkorrelation oder einer Regressionsanalyse.

3. Verfahren nach Anspruch 2, **dadurch gekennzeichnet, dass** aus den Empfangssignalen (24A/B) zugehörige komplexe Signale (28A/B) erzeugt werden und der Mustervergleich jeweils auf der Grundlage der Einhüllenden (30A/B) des jeweiligen komplexen Signals (28A/B) durchgeführt wird.

4. Verfahren nach einem der vorhergehenden Ansprüche, **dadurch gekennzeichnet, dass** die Empfangssignale (24A/B) über die vorbestimmte Länge jeweils in Korrelationspuffer (32) gespeichert werden, wobei die Korrelationspuffer (32), die die gleichen Abtastzeitpunkte der Empfangssignale (24A/B) beinhalten zu Korrelationspufferpaaren (34) zusammengefasst werden.

5. Verfahren nach Anspruch 4, **dadurch gekennzeichnet, dass** zu jedem Korrelationspuffer (32) und/oder Korrelationspufferpaar (34) eine Signallaufzeit (38) des Empfangssignals (24A/B) zum Bestimmen der Entfernung (r) der Empfangsanordnung zum Bodenprofil ermittelt wird.

6. Verfahren nach einem der vorhergehenden Ansprüche, **dadurch gekennzeichnet, dass** die Empfangssignale mit einer vorbestimmten Abtastfrequenz abgetastet werden, welche grösser ist als die vorbestimmte Frequenz des abgestrahlten Schallsignals, insbesondere ist die Abtastfrequenz mindestens doppelt so groß wie die vorbestimmte Frequenz der Empfangssignale.

7. Verfahren nach einem der vorhergehenden Ansprüche, **dadurch gekennzeichnet, dass** der Gangunterschied (56) durch Addition der Grobverzögerungszeit (44) und der Feinverzögerungszeit (52) ermittelt wird.

8. Verfahren nach einem der vorhergehenden Ansprüche, **dadurch gekennzeichnet, dass** mittels Multiplikation des Empfangssignals (28A/B) mit einer komplexen Zahl die Phasendifferenz (Δϕ) der um die Grobverzögerungszeit (44) verschobenen Empfangssignale ermittelt wird, und zwar solange, bis bei einem Vergleich des ersten, mit der komplexen Zahl multiplizierten Empfangssignals (28A) mit dem zweiten Empfangssignal (28B) eine optimale Übereinstimmung der Empfangssignale (28A/B) erzielt wird.

9. Vorrichtung zur Vermessung eines Bodenprofils mittels einer an einem Wasserfahrzeug (2) anbringbaren Sendeanordnung zum gerichteten Abstrahlen von Schallsignalen in ein Unterwasserareal (8) und einer an diesem Wasserfahrzeug (2) anbringbaren Empfangsanordnung mit wenigstens zwei elektroakustischen und/oder optoakustischen Wandlern (A, B) zum Empfangen der von dem Bodenprofil innerhalb des Unterwasserareals (8) reflektierten Schallwellen, aus denen die Wandler (A, B) jeweils ein Empfangssignal pro Lotung erzeugen, welches zu vorbestimmten Abtastzeitpunkten abtastbar und speicherbar ist,
wobei die Vorrichtung ein Verzögerungsmodul (41) zur Ermittlung einer Grobverzögerungszeit (44) aus den Empfangssignalen (24A/B) oder einer aus den Empfangssignalen (24A/B) abgeleiteten Größe über eine vorbestimmte Länge der Empfangssignale (24A/B) zweier Wandler (A, B) umfasst, wobei die Grobverzögerungszeit (44) die Anzahl an Abtastzeitpunkten angibt, um die die Empfangssignale (24A/B) aufgrund eines aus der Geometrie der Empfangsanordnung resultierenden Laufzeitunterschiedes der empfangenen Schallsignale gegeneinander verschoben sind,
**dadurch gekennzeichnet, dass** die Vorrichtung
ein Phasendifferenzmodul (48) zur Ermittlung jeweils einer Phasendifferenz (Δϕ) der um die Grobverzögerungszeit (44) verschobenen Empfangssignale für eine vorbestimmte Anzahl Abtastzeitpunkte sowie zur Ermittlung einer aus der Phasendifferenz (Δϕ) resultierenden Feinverzögerungszeit (52) umfasst und
eine Berechnungseinheit (58) zur Berechnung eines Gangunterschiedes (56) der empfangenen Schallwellen für diese Abtastzeitpunkte mittels der Grobverzögerungszeit (44) und der Feinverzögerungszeit (52) und eine weitere Berechnungseinheit (62) zur Berechnung jeweils einer Auftreffkoordinate (64) des zu vermessenden Bodenprofils für diese Abtastzeitpunkte aus einem aus dem Gangunterschied (56) resultierenden Empfangswinkel (60) und einer zu dem Abtastzeitpunkt zugehörigen Signallaufzeit (38) der Empfangssignale (24A/B).

10. Vorrichtung nach Anspruch 9, **gekennzeichnet durch** eine Empfangsanordnung, bei der zwei elektroakustische und/oder optoakustische Wandler (A, B) angeordnet sind, deren Abstand (18) zueinander grösser als eine halbe Wellenlänge eines erwarteten Empfangssignals ist.

## Claims

1. A method for measuring a ground profile using a transmitting assembly for directed emission of sound signals into an underwater area (8), which transmitting assembly is attached to a watercraft (2), and a receiving assembly attached to this watercraft (2) including at least two electroacoustic and/or optoacoustic converters (A, B) for receiving the sound waves reflected from the ground profile within the underwater area (8), from which sound waves the converters (A, B) respectively generate one received signal per sounding, which received signal is sampled and stored at predetermined sampling instants,
wherein within a predetermined length of the received signals of two converters (A, B) a coarse delay time (44) is determined from the received signals (24A/B) or a value is determined from the received signals (24A/B), wherein the coarse delay time (44) indicates the number of sampling instants by which the received signals (24A/B) are shifted relative to one another due to a propagation time difference of the received sound signals, which propagation time difference results from the geometry of the receiving assembly,
**characterized in that**
for each of a predetermined number of sampling instants of the received signals shifted by the coarse delay time (44), a phase difference (Δϕ) between these received signals as well as a fine delay time resulting from the phase difference (Δϕ) are determined; for these sampling instants a path difference (56) of the received sound waves is determined using the coarse delay time (44) and the fine delay time (52) and
for each of these sampling instants an impingement coordinate (64) of the ground profile to be measured from an angle of reception (60) resulting from the path difference (56) and a signal propagation time (38) of the received signals (24A/B), which signal propagation time (38) is associated with the sampling instant.

2. The method according to claim 1, **characterized in that** for determining the coarse delay time (44), a pattern matching is carried out of two received signals (24A/B) of the receiving assembly or a value derived from the received signals (24A/B), and namely using a statistical analysis method, in particular a cross-correlation or a regression analysis.

3. The method according to claim 2, **characterized in that** associated complex signals (28A/B) are generated from the received signals (24A/B), and the pattern matching is respectively carried out based on the envelopes (30A/B) of the respective complex signals (28A/B).

4. The method according to one of the preceding claims, **characterized in that** the received signals (24A/B) over the predetermined length are each stored in correlation buffers (32), wherein the correlation buffers (32) which contain the same sampling instants of the received signals (24A/B) are combined into correlation buffer pairs (34).

5. The method according to claim 4, **characterized in that** for each correlation buffer (32) and/or correlation buffer pair (34), a signal propagation time (38) is determined of the received signal (24A/B) for determining the distance (r) of the receiving assembly to the ground profile.

6. The method according to one of the preceding claims, **characterized in that** the received signals are sampled with a predetermined sampling frequency which is higher than the predetermined frequency of the emitted sound signal; in particular, the sampling frequency is at least twice as high as the predetermined frequency of the received signals.

7. The method according to one of the preceding claims, **characterized in that** the path difference (56) is determined by addition of the coarse delay time (44) and the fine delay time (52).

8. The method according to one of the preceding claims, **characterized in that** using multiplication of the received signal (28A/B) with a complex number, the phase difference (Δϕ) can be determined of the received signal shifted by the coarse delay time (44), and specifically until such time as an optimal agreement of the received signals (28A/B) is achieved by a comparison of the first received signal (28A) multiplied by the complex number with the second received signal (28B).

9. A device for measuring a ground profile using a transmitting assembly for directed emission of sound signals into an underwater area (8), which transmitting assembly is attachable to a watercraft (2), and a receiving assembly which is attachable to this watercraft (2) including at least two electroacoustic and/or optoacoustic converters (A, B) for receiving the sound waves reflected from the ground profile within the underwater area (8), from which sound waves the converters (A, B) respectively generate one received signal per sounding, which received signal can be sampled and stored at predetermined sampling instants,
wherein the device comprises a delay module (41) for determining a coarse delay time (44) from the received signals (24A/B) or a value derived from the received signals (24A/B) over a predetermined length of the received signals (24A/B) of two converters (A, B), wherein the coarse delay time (44) indicates the number of sampling instants by which the received signals (24A/B) are shifted with respect to one another due to a propagation time difference of the received sound waves, which propagation time difference results from the geometry of the receiving assembly, **characterized in that** the device comprises a phase difference module (48) for respectively determining a phase difference (Δϕ) of the received signals shifted by the coarse delay time (44) for a predetermined number of sampling instants as well as for determining a fine delay time (52) resulting from the phase difference (Δϕ) and
a calculating unit (58) for calculating a path difference (56) of the received sound waves for these sampling instants using the coarse delay time (44) and the fine delay time (52) and a further calculating unit (62) for respectively calculating an impingement coordinate (64) of the ground profile to be measured for these sampling instants from an angle of reception (60) resulting from the path difference (56) and a signal propagation time (38) of the received signals (24A/B), which signal propagation time (38) is associated with the sampling instant.

10. The device according to claim 9, **characterized by** a receiving assembly, wherein two electroacoustic and/or optoacoustic converters (A, B) are disposed, the spacing (18) of which to each other is greater than half a wavelength of an expected received signal.

## Revendications

1. Procédé pour mesurer un profil de fond au moyen d'un dispositif d'émission monté sur un véhicule marin (2) pour l'émission directionnelle de signaux acoustiques dans une aire sous-marine (8) et d'un dispositif de réception monté sur ce véhicule marin (2) comprenant au moins deux transducteurs électroacoustiques et/ou opto-acoustiques (A, B) destinés à recevoir les ondes acoustiques réfléchies par le profil de fond à l'intérieur de l'aire sous-marine (8), à partir desquelles les transducteurs (A, B) génèrent respectivement un signal de réception par sondage, qui est échantillonné et enregistré à des instants d'échantillonnage prédéterminés,
dans lequel en l'espace d'une longueur prédéterminée des signaux de réception de deux transducteurs (A, B), un temps de retard grossier (44) est déterminé à partir des signaux de réception (24A/B) ou d'une grandeur dérivée des signaux de réception (24A/B), le temps de retard grossier (44) indiquant le nombre d'instants d'échantillonnage de décalage entre les signaux de réception (24A/B) en raison d'une différence du temps de propagation des signaux acoustiques reçus résultant de la géométrie du dispositif de réception,
**caractérisé en ce que**
pour un nombre prédéterminé d'instants d'échantillonnage des signaux de réception décalés du temps de retard grossier (44), une différence de phase (Δϕ) entre ces signaux de réception et un temps de retard précis (52) résultant de cette différence de phase (Δϕ) sont respectivement déterminés, pour ces instants d'échantillonnage une différence de marche (56) des ondes acoustiques reçues est déterminée au moyen du temps de retard grossier (44) et du temps de retard précis (52) et
pour chacun de ces instants d'échantillonnage, une coordonnée d'incidence (64) du profil de fond à mesurer est déterminée à partir d'un angle de réception (60) résultant de la différence de marche (56) et d'un temps de propagation de signal (38), associé à l'instant d'échantillonnage, des signaux de réception (24A/B).

2. Procédé selon la revendication 1, **caractérisé en ce qu'**un appariement de formes de deux signaux de réception (24A/B) du dispositif de réception ou d'une grandeur dérivée des signaux de réception (24A/B) est effectué pour la détermination du temps de retard grossier (44), et ce au moyen d'un procédé d'analyse statistique, notamment d'une corrélation croisée ou d'une analyse par régression.

3. Procédé selon la revendication 2, **caractérisé en ce qu'**à partir des signaux de réception (24A/B), des signaux complexes (28A/B) associés sont générés et l'appariement de formes est effectué respectivement sur la base de l'enveloppe (30A/B) du signal complexe respectif (28A/B).

4. Procédé selon l'une des revendications précédentes, **caractérisé en ce que** les signaux de réception (24A/B) sont enregistrés pendant la longueur prédéterminée respectivement dans des mémoires-tampons de corrélation (32), les mémoires-tampons de corrélation (32) qui contiennent les mêmes instants d'échantillonnage des signaux de réception (24A/B) étant rassemblées en paires de mémoires-tampons de corrélation (34).

5. Procédé selon la revendication 4, **caractérisé en ce qu'**un temps de propagation de signal (38) du signal de réception (24A/B) est déterminé pour chaque mémoire-tampon de corrélation (32) et/ou paire de mémoires-tampons de corrélation (34) afin de déterminer la distance (r) du dispositif de réception par rapport au profil de fond.

6. Procédé selon l'une des revendications précédentes, **caractérisé en ce que** les signaux de réception sont échantillonnés avec une fréquence d'échantillonnage prédéterminée qui est supérieure à la fréquence prédéterminée du signal acoustique émis, et en particulier la fréquence d'échantillonnage est au moins deux fois plus élevée que la fréquence prédéterminée des signaux de réception.

7. Procédé selon l'une des revendications précédentes, **caractérisé en ce que** la différence de marche (56) est déterminée par l'addition du temps de retard grossier (44) et du temps de retard précis (52).

8. Procédé selon l'une des revendications précédentes, **caractérisé en ce que** la multiplication du signal de réception (28A/B) par un nombre complexe permet de déterminer la différence de phase (Δϕ) des signaux de réception décalés du temps de retard grossier (44), et ce jusqu'à ce que lors d'une comparaison du premier signal de réception (28A) multiplié par le nombre complexe avec le second signal de réception (28B) une concordance optimale des signaux de réception (28A/B) soit obtenue.

9. Dispositif pour mesurer un profil de fond au moyen d'un dispositif d'émission pouvant être monté sur un véhicule marin (2) pour l'émission directionnelle de signaux acoustiques dans une aire sous-marine (8) et d'un dispositif de réception pouvant être monté sur ce véhicule marin (2) comprenant au moins deux transducteurs électroacoustiques et/ou opto-acoustiques (A, B) destinés à recevoir les ondes acoustiques réfléchies par le profil de fond à l'intérieur de l'aire sous-marine (8), à partir desquelles les transducteurs (A, B) génèrent respectivement un signal de réception par sondage, qui peut être échantillonné et enregistré à des instants d'échantillonnage prédéterminés, le dispositif comprenant un module de retard (41) pour déterminer un temps de retard grossier (44) à partir des signaux de réception (24A/B) ou d'une grandeur dérivée des signaux de réception (24A/B) pendant une longueur prédéterminée des signaux de réception (24A/B) de deux transducteurs (A, B), le temps de retard grossier (44) indiquant le nombre d'instants d'échantillonnage de décalage entre les signaux de réception (24A/B) en raison d'une différence de temps de propagation des signaux acoustiques reçus résultant de la géométrie du dispositif de réception,
**caractérisé en ce que** le dispositif
comprend un module de différence de phase (48) pour déterminer respectivement une différence de phase (Δϕ) des signaux de réception décalés du temps de retard grossier (44) pour un nombre prédéterminé d'instants d'échantillonnage ainsi que pour déterminer un temps de retard précis (52) résultant de la différence de phase (Δϕ) et
une unité de calcul (58) pour calculer une différence de marche (56) des ondes acoustiques reçues pour ces instants d'échantillonnage au moyen du temps de retard grossier (44) et du temps de retard précis (52) et une autre unité de calcul (62) pour calculer une coordonnée d'incidence (64) du profil de fond à mesurer pour chacun de ces instants d'échantillonnage à partir d'un angle de réception (60) résultant de la différence de marche (56) et d'un temps de propagation de signal (38), associé à l'instant d'échantillonnage, des signaux de réception (24A/B).

10. Dispositif selon la revendication 9, **caractérisé par** un dispositif de réception, dans lequel deux transducteurs électroacoustiques et/ou opto-acoustiques (A, B) sont agencés, l'écart (18) entre eux étant supérieur à la moitié de la longueur d'onde d'un signal de réception prévu.
